# EUROPÄISCHE PATENTANMELDUNG

(11) **EP 0 863 075 A1**
(43) Veröffentlichungstag der Anmeldung: **09.09.1998**
(21) Anmeldenummer: 97119485.7
(22) Anmeldetag: 07.11.1997
(51) Int. Cl.: B64G 1/36, G05D 1/08

(54) **Grober Sonnen- oder Erdsensor für einen Satelliten sowie Verfahren zur groben Positionsbestimmung von Sonne oder Erde an Bord eines Satelliten**

(30) Priorität: 07.03.1997 DE 19709351
(71) Anmelder: DORNIER GmbH, 88039 Friedrichshafen (DE)
(72) Erfinder: Doll, Bernhard, Dipl.-Ing., 88090 Immenstaad (DE); Pitz, Wolfgang, Dipl.-Ing., 88682 Salem (DE)
(74) Vertreter: Meel, Thomas

(57) **Zusammenfassung**

Die Erfindung betrifft einen groben Sonnen- oder Erdsensor für einen Satelliten. Der erfindungsgemäße Sensor umfaßt mindestens sechs Sensorköpfe (80). Diese sind an dem Satelliten derart angeordnet, daß sie eine komplette Rundumsicht ermöglichen. Ein Sensorkopf (80) umfaßt dabei
a) einen Temperatursensor (1,2) und eine Solarzelle (3)
   oder
b) zwei Temperatursensoren (1,2), die unterschiedliche thermooptische Eigenschaften aufweisen.

## Beschreibung

Die Erfindung betrifft einen groben Sonnen- oder Erdsensor für Satelliten sowie Verfahren zur groben Positionsbestimmung von Sonne oder Erde an Bord eines Satelliten.

### Einsatzbereich, Stand der Technik

Nahezu alle Satelliten nutzen für die Erstakquisition und den "Safe Mode" einfache, robuste Lagesensoren. Dabei genügen ca 10° Genauigkeit um die Sicherheit des Satelliten zu gewährleisten. Meist werden hierzu Sonnensensoren eingesetzt, die jedoch folgende Nachteile haben:
- Einfache, preiswerte Sonnensensoren, die üblicherweise mehrere Solarzellen umfassen, werden durch das Erd - Albedo um bis zu 20° getäuscht,
- Nominal erdorientierte Satelliten behalten im Safe Mode nicht ihre Lage und müssen deswegen auf beide Fluglagen ausgelegt werden (kritisch für Stromerzeugung und Wärmehaushalt).
- raumfahrtübliche Erdsensoren, die üblicherweise mehrere IR-Sensoren umfassen, sind teuer und eignen sich aufgrund ihres eingeschränkten Sichtbereichs nur schlecht für Erstakquisition und "Safe Mode".
Deswegen besteht, insbesondere für erdnahe (< 1500 km), nominal erdorientierte Satelliten, der Bedarf nach einem einfachen, groben Sensor der eine Erstakquisition und einen erdorientierten "Safe Mode" unterstützt.

### Typische Anforderungen

Für die Anwendung als grober Sonnen-/Erdsensor bei erdnahen, erdorientierten Satelliten ergeben sich folgende technischen Anforderungen:
- Absolute Genauigkeit < 10° für Sonnen- und Erdvektor für Drehraten < 0,2 Upm (Umdrehungen pro Minute) und 1 Hz Abtastrate
- Geringe Trägheit so daß Drehraten - Messungen bis 10 Upm möglich sind (bei 1 Hz Abtastrate)
- Ein - Fehler - Tolerant
- Komplette Rundumsicht
- Geringes Rauschen
- Möglichst geringes Gewicht
- Möglichst geringer Stromverbrauch
- Möglichst einfache Montage an den Außenseiten des Satelliten.

### Aufgabe

Aufgabe der Erfindung ist es, die Lage der Sonne oder Erde bezüglich eines satellitenfesten Koordinatensystems mit einer Genauigkeit von ±10° festzustellen. Dabei sollen die obengenannten Anforderungen gegenüber bekannten Ausführungen möglichst kostengünstig und mit hoher Zuverlässigkeit erreicht werden.

### Lösung der Aufgabe

Diese Aufgabe wird durch den Gegenstand des Patentanspruchs 1 gelöst. Vorteilhafte Ausführungen sowie Verfahren zur groben Bestimmung von Erde und Sonne sind Gegenstand weiterer Ansprüche.

Der erfindungsgemäße groben Sonnen- oder Erdsensor umfaßt mindestens sechs Sensorköpfe, die auf dem Satelliten derart angeordnet sind, daß sie eine komplette Rundumsicht ermöglichen, wobei ein Sensorkopf
a) einen Temperatursensor und eine Solarzelle umfaßt oder
b) zwei Temperatursensoren umfaßt, die unterschiedliche thermooptische Eigenschaften aufweisen, z.B. unterschiedliche solare Absorptionskonstanten α bei gleicher Infrarot-Emissionskonstanten ε.

### Vorteile der Erfindung

- Sehr preiswerter Sensor, da aus einfachen Raumfahrt Standardkomponenten aufgebaut.
- Ohne Zusatzelektronik- Einheit und ohne große Modifikationen an einem Raumfahrt-Standardrechner anzuschließen.
- Extrem geringer Stromverbrauch.
- Einfache Montage am Satelliten.

Im folgenden werden vorteilhafte Ausführungen der Erfindung ausführlich beschrieben.

### Sensorkonfiguration

Im Standardfall werden 6 orthogonal ausgerichtete Sensorköpfe an dem Satelliten angeordnet, um einen in allen Richtungen eindeutigen Sonnen- bzw Erdvektor zu bestimmen. Wie bei handelsüblichen Sensoren wird die Anordnung so gewählt, daß jeder Sensorkopf freie Sicht über eine möglichst komplette Hemisphäre besitzt. Dadurch werden Störungen durch Reflektion der Sonnen- bzw. Albedostrahlung oder satelliteneigener Infrarotstrahlung vermieden. Falls die Sensitivität in bestimmte Richtungen erhöht werden soll, können auch mehr als 6 Sensorköpfe eingesetzt werden.

### Design des Sensorkopfes

Aus Redundanzgründen umfaßt jeder Sensorkopf 3 Meßstellen. Um die Funktion / Messung sicherzustellen, reicht eine beliebige Kombination von zwei dieser Meßstellen aus.
- Meßstelle 1 - Temperatur:: - Die gemessene Temperatur ist ein Maß für die vom Sensor absorbierte Sonnen und Albedostrahlung, sowie der absorbierten Infrarotstrahlung der Erde.
- Meßbereich - 200°C bis + 120°C (z.B. PT 10000 Thermistor)
- Thermooptische Eigenschaften z.B. α = 0,1; ε = 0,8, z. B. Teflon SSM (SSM = Second Surface Mirror).
- Meßstelle 2 - Temperatur:: - Die gemessene Temperatur ist ein Maß für die vom Sensor absorbierte Sonnen und Albedostrahlung, sowie der absorbierten Infrarotstrahlung der Erde.
- Meßbereich - 200°C bis + 120°C (z.B. PT 10000 Thermistor)
- Thermooptische Eigenschaften etwa α = 0,7; ε = 0,8 (z.B. bei Verwendung einer Solarzelle als thermische Oberfläche des Temperatursensors)
- Meßstelle 3 - Solarzelle:: - Der erzeugte Strom wird gemessen und ist ein Maß für die eingestrahlte Sonnen- und Albedo Intensität.
- Meßbereich - 200°C bis + 120°C (z.B. PT 1000 Thermistor)
- Thermooptische Eigenschaften etwa α = 0,7; ε = 0,8 (Solarzelle)

### Sensordaten und Schnittstellen

Jeder Sensorkopf wird mit 4 Schrauben am Satelliten befestigt. Jeder Sensorkopf hat ein Gewicht geringer als 50 g und eine Leistungsaufnahme geringer als 0,01 W. Eine spezielle Sensorelektronik- Einheit ist nicht notwendig, da alle Funktionen ohne erheblichen Mehraufwand durch einen konventionellen Raumfahrt - Bordrechner übernommen werden können.
- Die Temperaturmessung wird zusammen mit anderen, internen Temperaturmessungen vom Bordcomputer durchgeführt. Da diese in der Regel über Multiplexer angesteuert sind bedeuten die Sonnen-/Erdsensor Meßstellen keinen erheblichen Zusatzaufwand für den Bordrechner.
- Die Strommessung der Solarzelle erfolgt über eine Spannungsmessung an einem kleinen Festwiderstand (z.B. 0,6 Ω) der die Solarzelle quasi kurzschließt. Der Widerstand sollte im Satelliteninnenraum befestigt werden um nicht extremen Temperaturschwankungen ausgesetzt zu werden. Er kann im Kabelbaum oder im Bordrechner untergebracht werden. Da Spannungsmessungen zu den Standardfunktionen eines Bordrechners gehören, bedeuten die Sonnen-/Erdsensor Meßstellen keinen erheblichen Zusatzaufwand für den Bordrechner.

### Funktionsweise

Ziel ist die Bestimmung des Sonnen und Erdvektors im Satellitenkoordinatensystem. Als Abtastrate bietet sich typischerweise 1 Hz an. Die Auswertung der individuellen Sensordaten erfolgt in folgenden Schritten wobei Variante a) den Nominalpfad und Variante b) den Ersatzpfad (nach Ausfall der Solarzelle) darstellt :

Schritt 1: Korrektur der Temperatur-Meßwerte zum Ausgleich der (thermischen) Trägheit. Dabei werden alle Temperaturmessungen so korrigiert, daß sich ein praktisch verzögerungsfreies Sensorsignal ergibt. Hierzu werden die letzte und die aktuelle Temperaturmessung entsprechend ihrer Zeitkonstanten exponentiell extrapoliert, um die momentan gültige Stationärtemperatur zu ermitteln.
Für die Strommessung der Solarzelle ist eine Trägheitskorrektur nicht nötig, da der Solarzellenstrom praktisch verzögerungsfrei der Einstrahlleistung folgt.

Schritt 2: Bestimmung der auf die einzelnen Sensorköpfe zugestrahlten Sonnen- und Albedointensität durch:
a) Berechnung aus dem gemessenen Solarzellenstrom
b) Auswertung der Temperaturdifferenz an den beiden Temperaturmeßstellen eines Sensorkopfes. Dies ist aufgrund der unterschiedlichen thermooptischen Eigenschaften ( α /ε Verhältnis) möglich. Dieser Ersatzpfad wird nach dem Ausfall der Solarzelle benutzt (Design-Redundanz).

Schritt 3: Berechnung der zugestrahlten Erdwärme aus den in Schritt 1 ermittelten Temperaturwerten abzüglich dem Einfluß der in Schritt 2 ermittelten, zugestrahlten Sonnen- und Albedointensität. Hierzu wird benutzt:
a) Meßstelle 1 (Nominalpfad, da wegen keinem α die Sensitivität auf Sonnen- und Albedostrahlung geringer, und so der Meßfehler am geringsten ist),
b) Meßstelle 2 (Ersatzpfad, falls Meßstelle 1 ausgefallen ist)

Schritt 4: Berechnung des Nadirvektors über vektorielle Addition der korrigierten Temperaturwerte aus Schritt 3.

Schritt 5: Berechnung der zugestrahlten Sonnenintensität mit der in Schritt 2 bestimmten Sonnen- und Albedointensität (gemeinsamer Meßwert) durch Abzug der Albedostrahlung. Dazu gelingt mit folgender Vorgehensweise:
- Zunächst werden die Sonnen- und Albedo-Meßwerte aller Sensorköpfe vektoriell addiert und der resultierende Betrag mit einem Nominalwert für eine mittlere Solarkonstante verglichen. Die Differenz ist der Betrag des Albedovektors.
- Der so ermittelte Betrag der Albedo-Gesamtstrahlung wird entsprechend den in Schritt 3 und 4 ermittelten Erdstrahlungskomponenten (Infrarotstrahlung der Erde) prozentual den einzelnen Sensorköpfen zugeordnet. Dies ist möglich, weil sich die Erd- und Albedostrahlung prozentual gleich auf die einzelnen Sensorköpfe auswirken.
- Der so ermittelte Albedoanteil pro Sensorkopf wird von der Gesamtmessung (Sonne und Albedo) abgezogen, so daß sich der reine Sonnenanteil ergibt.

Schritt 6: Berechnung des Sonnenvektors über die vektorielle Addition der korrigierten Sensorkopfwerte aus Schritt 5.

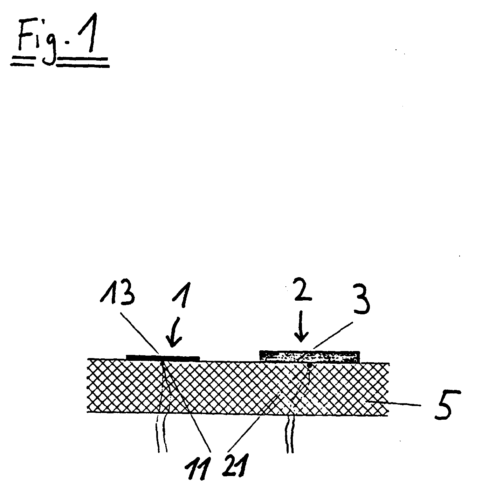

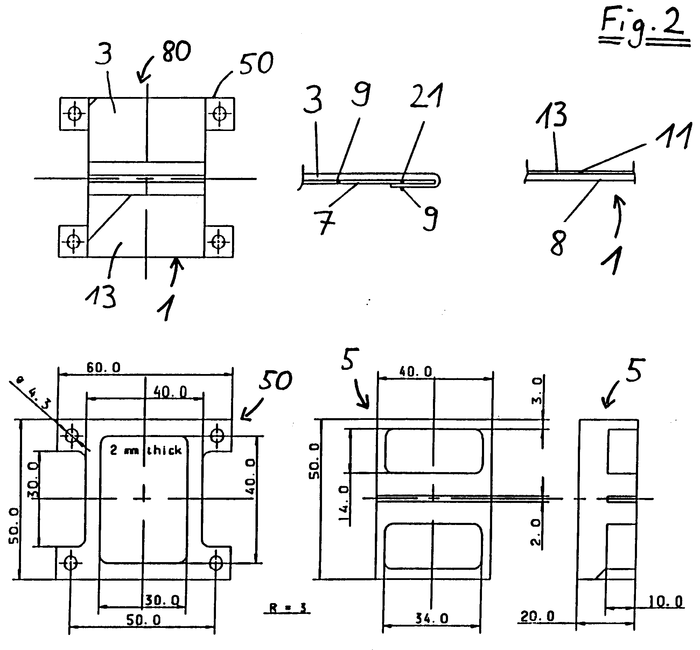

Ausführungsbeispiele des erfindungsgemäßen Erd- oder Sonnensensors werden anhand zweier Fig. näher erläutert. Die Fig. 1 und 2 zeigen jeweils den Aufbau eines Sensorkopfs in schematischer Darstellung bzw. in Form einer technischen Zeichnung. In Fig. 2 sind beispielhafte Bemaßungen angegeben.

Fig. 1 zeigt einen Sensorkopf mit zwei Temperatursensoren 1,2 sowie einer Solarzelle 3. Die Bezugsziffern 11 und 21 bezeichnen den Thermistor des Temperatursensors 1 bzw. 2, z.B. vom Typ PT 10000. Bezugsziffer 13 bezeichnet die thermische Oberfläche des Temperatursensors 1, z.B. aus einer Teflon- SSM-Folie. Im dargestellten Ausführungsbeispiel dient die Solarzelle 3 gleichzeitig als thermische Oberfläche des zweiten Temperatursensors 2. Damit die Temperaturmessung lediglich die Sonnen-, Albedo- und Erdstrahlung erfaßt und nicht durch durch Wärmeleitung zum Satellitenkörper gestört wird, sind die Sensoren auf einer Isolationsschicht 5 aus vakuumtauglichen Schaum befestigt.

Fig. 2 zeigt links oben eine Draufsicht auf einen Sensorkopf 80, der auf eine Basisplatte 50 angeordnet ist. Wie bei dem Sensorkopf nach Fig. 1 ist die Solarzelle 3 gleichzeitig die thermische Oberfläche eines Temperatursensors. Die thermische Oberfläche des anderen Temperatursensors ist mit 13 bezeichnet.

Die mittlere Darstellung in der oberen Reihe zeigt eine Schnitt durch die Solarzelle 3. Man erkennt auch den Thermistor 21 des zweiten Temperatursensors sowie eine Kaptonfolie 7 an der Unterseite der Solarzelle 3. Die Kaptonfolie 3 dient zur elektrischen Isolation. Lötpunkte sind mit 9 bezeichnet.

Die rechte Darstellung der oberen Reihe zeigt einen Schnitt durch den Temperatursensor 1 mit einer Teflon SSM-Folie als thermischer Oberfläche 13 und einer Platte 8 aus Aluminium an der Unterseite. Der Thermistor ist mit 11 bezeichnet.

Die linke Darstellung in der unteren Reihe zeigt die Basisplatte 50.

Die beiden Darstellungen unten in der Mitte sowie unten rechts zeigen die Wärmeisolationsschicht 5 aus vakuumtauglichen Schaum, auf der die Sensoren angeordnet sind.

## Patentansprüche

1. Grober Sonnen- oder Erdsensor für einen Satelliten, **gekennzeichnet durch** mindestens sechs Sensorköpfe (80), die an dem Satelliten derart angeordnet sind, daß sie eine komplette Rundumsicht ermöglichen, wobei ein Sensorkopf (80)
a) einen Temperatursensor (1,2) und eine Solarzelle (3) umfaßt
oder
b) zwei Temperatursensoren (1,2) umfaßt, die unterschiedliche thermooptische Eigenschaften aufweisen.

2. Sensor nach Anspruch 1, **dadurch gekennzeichnet**, daß ein Sensorkopf (80) genau eine Solarzelle (3) sowie zwei Temperatursensoren (1,2) mit unterschiedlichen thermooptischen Eigenschaften aufweist.

3. Sensor nach Anspruch 1 oder 2, **dadurch gekennzeichnet**, daß jeder Sensorkopf (80) freie Sicht über eine komplette Hemispähre besitzt.

4. Sensor nach einem der Ansprüche 1 bis 3, **dadurch gekennzeichnet**, daß genau sechs Sensorköpfe (80) vorhanden sind, die orthogonal zueinander angeordnet sind.

5. Sensor nach einem der vorangehenden Ansprüche, **dadurch gekennzeichnet**, daß die Sensorköpfe (80) auf einer Wärmeisolationsschicht (5) angeordnet sind.

6. Verfahren zur Positionsbestimmung der Sonne an Bord eines Satelliten, wobei auf dem Satelliten mindestens sechs Sensorköpfe (80) derart angeordnet werden, daß sie eine komplette Rundumsicht ermöglichen, und ein Sensorkopf (80) einen Temperatursensor (1,2) und eine Solarzelle (3) oder zwei Temperatursensoren (1,2), die unterschiedliche thermooptische Eigenschaften aufweisen, umfaßt, mit folgenden Verfahrensschritten:
a) Bestimmung der zugestrahlten, kumulierten Sonnen- und Albedointensität aus den Meßwerten der Solarzelle (3) oder durch Auswertung der Temperaturdifferenz an den beiden Temperatursensoren (1,2) eines Sensorkopfs (80),
b) Bestimmung der zugestrahlten Erdwärme aus den Meßwerten eines Temperatursensors (1,2) abzüglich dem Einfluß der nach Schritt a) bestimmten kumulierten Sonnen- und Albedointensität,
c) Bestimmung der zugestrahlten Sonnenintensität mit der in Schritt a) bestimmten kumulierten Sonnen- und Albedointensität durch Abzug der Albedostrahlung mit folgenden Verfahrensschritten:
- vektorielle Addition der kumulierten Sonnen- und Albedointensität der einzelnen Sensorköpfe (80) aus Schritt a) und Abzug eines Nominalwerts für eine mittlere Solarkonstante von dem Betrag der Resultierenden,
- der so bestimmte Betrag der Albedostrahlung wird entsprechend den in Schritt b) ermittelten Erdstrahlungskomponenten prozentual den einzelnen Sensorköpfen (80) zugeordnet,
- der so ermittelte Albedoanteil pro Sensorkopf (80) wird von der in Schritt a) bestimmten kumulierten Sonnen- und Albedointensität jedes Sensorkopfs (80) abgezogen
d) Bestimmung des Sonnenvektors durch vektorielle Addition der in Schritt
c) erhaltenen Werte der Sonnenintensität der einzelnen Sensorköpfe (80).

7. Verfahren zur Positionsbestimmung der Erde an Bord eines Satelliten, wobei auf dem Satelliten mindestens sechs Sensorköpfe (80) derart angeordnet werden, daß sie eine komplette Rundumsicht ermöglichen, und ein Sensorkopf (80) einen Temperatursensor (1,2) und eine Solarzelle (3) oder zwei Temperatursensoren (1,2), die unterschiedliche thermooptische Eigenschaften aufweisen, umfaßt, mit folgenden Verfahrensschritten:
a) Bestimmung der zugestrahlten, kumulierten Sonnen- und Albedointensität aus den Meßwerten der Solarzelle (3) oder durch Auswertung der Temperaturdifferenz an den beiden Temperatursensoren (1,2) eines Sensorkopfs (80),
b) Bestimmung der zugestrahlten Erdwärme aus den Meßwerten eines Temperatursensors (1,2) abzüglich dem Einfluß der nach Schritt a) bestimmten kumulierten Sonnen- und Albedointensität,
c) Bestimmung des Nadirvektors durch vektorielle Addition der korrigierten Temperaturwerte nach Schritt b) der einzelnen Sensorköpfe (80).

8. Verfahren nach einem der Ansprüche 6 oder 7, dadurch gekennzeichnet, daß die Meßwerte der Temperatursensoren (1,2) zur Kompensation der thermischen Trägheit korrigiert werden.

9. Verfahren nach Anspruch 8, dadurch gekennzeichnet, daß zur Korrektur der Meßwerte der Temperatursensoren (1,2) der aktuelle und der vorhergehende Meßwert entsprechend ihrer Zeitkonstanten exponentiell extrapoliert werden.
